# EUROPEAN PATENT SPECIFICATION

(11) **EP 3 215 677 B1**
(45) Date of publication and mention of the grant of the patent: **01.08.2018**
(21) Application number: 14793589.4
(22) Date of filing: 06.11.2014
(51) Int. Cl.: E01C 19/20

(54) **SPREADING APPARATUS**
VERTEILUNGSVORRICHTUNG
APPAREIL D'ÉPANDAGE

(43) Date of publication of application: 13.09.2017
(73) Proprietor: Husqvarna AB, 561 82 Huskvarna (SE)
(72) Inventor: MOCK, Axel, 89134 Blaustein (DE)
(74) Representative: Finkele, Rolf
(86) International application number: PCT/EP2014/073942
(87) International publication number: WO 2016/070927

(56) References cited:
- WO-A1-92/02447
- WO-A1-2013/091680
- DE-U1-202007 010 998

## Description

### TECHNICAL FIELD

The present invention relates to a selection plate for a spreading apparatus and spreading apparatus for dispensing particulate material and in particular for dispensing salt, grit, fertilizer or seeds with such selection plate.

### BACKGROUND

Spreading apparatus are conveniently used for melting ice or snow from walkways, roads and car-parks during winter and also for seeding or fertilizing lawns and garden patches. The Spreading apparatus allow dispensing of a particulate material stored in a bucket via a dispensing arrangement. The dispensing arrangement has an opening and configured to dispense the particulate material under the effect of gravity. During storage under humid conditions the particulate material, particularly a material with hygroscopic properties, form clumps by absorbing moisture present in atmospheric air. These clumps may cause uneven flow of the particulate material while dispensing and also block the opening in the dispensing arrangement.

German utility model DE 202007010998 U1as well as patent application WO 92/02447 A1 disclose a grit box for spreading grit on walkways. The grit box includes a container for storing the spreading material and a plurality of openings are provided on a wall of the container for spreading. The openings are arranged in a row extending from side to side wherein an interior barrier, having a plurality of upright projections, is also provided in a region adjacent to the openings for breaking the clumps of material. These projections extend along the row of openings. These projections effectively capture and break the clumps which are present at a bottom of the container, however the clumps which are present above the upright projections may bypass the upright projections and block the openings and eventually contribute to an uneven dispensing.

From patent application WO 2013/091680 A1 a spreading apparatus is known consisting of a bucket and an associated cover that exhibits a dispensing arrangement embodied as a selection plate. The selection plate defines openings that can be adjusted according to the required amount for dispensing of the particulate material while dispensing, with some openings comprising a barrier to break clumps of the particulate material while dispensing The spreading apparatus further comprises a shovel portion configured to facilitate at least one of dispensing the particulate matter and filling the particulate matter into the bucket

In light of the foregoing, there is a need for an efficient way of dispensing particulate material and in particular for dispensing salt, grit, fertilizer or seeds.

### SUMMARY

In view of the above, it is an objective of the present invention to solve or at least reduce the problems discussed above. In particular, the objective is to provide an improved apparatus for dispensing particulate material. The objective is at least partially achieved according to a novel apparatus, for dispensing particulate material. The spreading apparatus includes a bucket configured to store the particulate material and a cover connected to the bucket. The spreading apparatus includes a dispensing arrangement having at least one opening to dispense the particulate material and a barrier is provided to break clumps of the particulate material while dispensing. The barrier comprises at least one guiding member transversely disposed inside the at least one opening. According to an aspect of the present invention, the transversely disposed guiding members provide greater structural strength while breaking any clumps of the particulate material. Further, the guiding member has a longitudinal edge that is at least partially arranged normally offset, with respect to a plane of the opening, preferably by a distance at least twice a thickness of the openings. Further, the longitudinal edge has a profiled surface forming a narrow flange and a broad flange. The broad flange is configured to be positioned downward, while dispensing the particulate material, to act as a directional support structure for the particulate material and improves scattering of the particulate material by further breaking of the clumps of the particulate material. Moreover, according to an aspect of the the invention the guiding members are also provided at corner locations of the opening to provide the extensive directional support while dispensing of the particulate material.

According to an further aspect of the invention, the dispensing arrangement is a selection plate attached to the cover of the spreading apparatus. The cover further may include a shovel portion configured to facilitate at least one of dispensing the particulate material and filling the particulate material into the bucket. Furthermore, the cover or the bucket itself may include a handle configured to facilitate handling of the spreading apparatus. The cover may be detablely or hingedly connected with the bucket.

### BRIEF DESCRIPTION OF THE DRAWINGS

The invention will in the following be described in more detail with reference to the enclosed drawing, wherein.

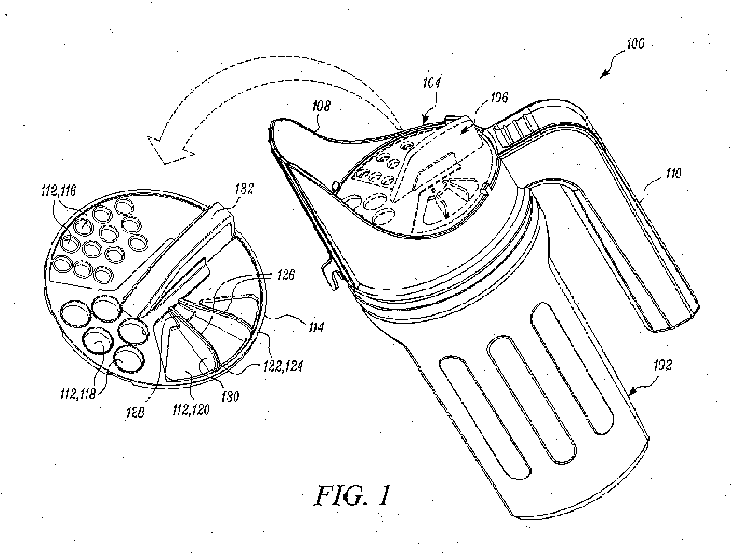

FIG. 1 illustrates perspective view of a spreading apparatus, according to an embodiment of the present invention; and

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized In other embodiments and even other types of devices. In the drawings, like numbers refer to like elements.

FIG. 1 illustrates perspective view of a spreading apparatus **100,** according to an embodiment of the present invention. The spreading apparatus **100** is used for dispensing a particulate material and in particular for dispensing salt, fertilizer or seeds in sidewalks, car-parks and garden etc.

In alternate embodiments, the spreading apparatus **100** can be used to dispense other particulate materials such as grit, sand etc.

The spreading apparatus **100** includes a bucket **102** and a cover **104** detachably attached to the bucket **102.** The bucket **102** is configured to store the particulate material. In an embodiment, the cover 1**04** is attached to the bucket **102** using a bayonet locking mechanism, which may include inserting and rotating vertically protruding portions (not shown) of the cover **104** into a groove (not shown) formed within the bucket **102** to enable an airtight locking. In another embodiment, the cover **104** may be connected to the bucket **102** using a snap-fit locking mechanism. As will be understood by a person skilled in the art, the locking mechanisms are merely exemplary and may vary based on design and application of the spreading apparatus. In the illustrated embodiment, the cover **104** includes a dispensing arrangement **106,** a shovel portion **108,** and a handle **110.** In certain embodiments, other product features and respective uses while filling, re-filing or dispensing of the particulate material in the spreading apparatus **100** may be desired. WO20131091680A1 is a PCT application related to a dispensing apparatus by the same assignee, which discloses various embodiments related to these other product features and respective uses in the spreading apparatus **100.**

The dispensing arrangement **106** has at least one opening **112** which is configured to dispense the particulate material. According to the present invention, the dispensing arrangement **106** is embodied as a selection plate **114,** the selection plate **114** includes a plurality of apertures, defining the at least one opening **112,** that can be adjusted according to the required amount for dispensing of the particulate material. In an exemplary embodiment, the selection plate **114** may include a first set of apertures **116,** a second set of apertures **118** and a third aperture **120.** The second set of apertures **118** includes the apertures that are relatively larger than the first set of apertures **116** and smaller than the third aperture **120.** Further, the third aperture **120** is a single aperture that is larger than the first and second set of apertures **116, 118.** For example, if the required spread amount for dispensing the particulate material is very less, such as sprinkling of the particulate material, then the first set of apertures **116** may be used. Similarly, when the required spread amount Is large, then the second or third set of aperture **118, 120** may be used. As will be appreciated by a person skilled in the art, the set of apertures disclosed herein are merely illustrative and can be extended to any number and size of apertures

The spreading apparatus **100** further includes a barrier **122,** provided at the third aperture **120,** which is adapted to break any clumps of the particulate matter during dispensing. According to an embodiment of the present invention, the barrier **122** includes guiding members **124** which are transversely disposed inside the defined opening of the third aperture **120** and also divide the third aperture **120.** Each of the guiding members **124** have a rib structure having a longitudinal edge **126** which is at least partially arranged vertically or normally offset with respect to a plane of the opening **112** on the selection plate **114.** Further, the vertical or normal offsetting of at least parts of the longitudinal edge **126** is at least twice a thickness of the openings **112.** According to an embodiment of the present invention, the longitudinal edges **126** has a profiled surface such that a narrow flange **128** of the longitudinal edge **126** is positioned and supported towards a geometrical centre of the selection plate **114 and** a broad flange **130** of the longitudinal edge **126** is positioned and supported towards a circumference of the selection plate **114.** According to the invention, the guiding members **124** are moulded together with the selection plate **114** during manufacturing or alternatively joined by adhesive at the narrow flange **12B** and the broad flange **130.**

According to an embodiment of the present invention, the selection plate **114** is connected to the cover **104** by a spring loaded mechanism to hold the selection plate **114** in a correct position as per desired dispensing of the particulate material The selection plate **106** also includes a knob **132** configured to adjust or select the one or more set of apertures **116, 118, 120.** Further, the shovel portion **108** can be used for easy shovelling of external material such as snow that is slightly melted, while the selection plate 114 Is completely closed. In a yet another embodiment, the cover **104** may be used separately, wherein the shovel portion **108** may be used to simply shovel the external material or refilling of the particulate material into the bucket **102.** Furthermore, the handle **110** is connected to the cover **104** and enables handling of the spreading apparatus **100** and of the cover **104** separately for shovelling the external material, such as snow, or refilling the particulate material into the bucket **102.** In various other alterative embodiments, the selection plate may be attached to the spreading apparatus at any other possible location, based on the design and size, and not limited to have an assembly with the cover (**106**) only.

According to an aspect of the present invention, the barrier **122** having the transversely disposed guiding members **124** which are supported at two points, at the narrow flange **128** and the broad flange **130,** provide greater structural strength while breaking any clumps of the particulate material as compared to interior upright projections. A lateral or sideways force acting on an upright projection, due to the heavier clumps of particulate material, may exert higher bending moment as compared to two point supported guiding members 124. Further, any imperfection or defect caused during moulding or joining of the upright projections makes them more susceptible to breaking under the action of these lateral forces. Moreover, during dispensing the guiding members **124** according to present invention also capture and break all the clumps of particulate material without a miss, which may otherwise be missed if they are present above the interior upright projections and bypass the upright projections while dispensing.

According to another aspect of the present invention, the guiding members 124 having the profiled structure with the broad flange **130** positioned downward, while dispensing under the action of gravity, acts as a directional support structure for the particulate material. While dispensing the particulate material accompanied with a left and right movement of the spreading apparatus **100,** the particulate material may bounce against the broad flange **130** of the guiding members to break any clumps of the particulate material and further improve scattering. It will apparent to a person having ordinary skill in art that, the profiled structure of the guiding members **124,** such as a height of the broad end **130,** may be designed and adjusted based on a geometrical size of opening of the third aperture **120.**

In an alternative embodiment of the spreading apparatus **100** (see FIG. 1), the opening **112** of the third aperture **120** may also include the guiding members **124** at corner locations of the opening **112.**

In the drawing and specification, there have been disclosed preferred embodiments and examples of the invention and, although specific terms are employed, they are used in a generic and descriptive sense only and not for the purpose of limitation of the scope of the invention being set forth in the following claims.

### PART LIST

- 100: spreading apparatus
- 102: bucket
- 104: cover
- 106: dispensing arrangement
- 108: shovel portion
- 110: handle
- 112: openings
- 114: selection plate
- 116: first set of apertures
- 118: second set of apertures
- 120: third aperture
- 122: barrier
- 124: guiding members
- 126: longitudinal edge
- 128: narrow flange
- 130: broad flange
- 132: knob

## Claims

1. A selection plate (**114**) for and attachable to a spreading apparatus (**100**) for dispensing particulate material, the spreading apparatus (**100**) comprising:
a bucket (**102**) configured to store the particulate material;
a cover (**104**) connected to the bucket (**102**);
a dispensing arrangement (**106**) having at least one opening (**112**) and configured to dispense the particulate material,
with the selection plate (114) being embodied as the dispensing arrangement and being attachable to the cover (**104**) and including a plurality of apertures, defining the at least one opening,
whereby the at least one opening can be adjusted according to the required amount for dispensing of the particulate material,
the dispensing arrangement further comprising
a barrier (**122)** to break clumps of the particulate material while dispensing,
**characterized in that**
the barrier (**122**) comprises at least one guiding member (**124**) transversely disposed inside the at least one opening (**112**),
wherein the at least one guiding member having a longitudinal edge (**126**) that is at least partially arranged normally offset to a plane of the at least one opening (**112**),
wherein the longitudinal edge (**126**) has a narrow flange (**128**) and a broad flange (**130**), wherein the broad flange (**130**) is configured to be positioned downward, while dispensing the particulate material, to act as a directional support structure,
with the guiding members (**124**) being moulded together with the selection plate (**114**) during manufacturing or alternatively joined by adhesive at the narrow flange (**128**) and the broad flange (**130**).

2. The selection plate (114) of claim 1, wherein the normal offsetting of the longitudinal edge (**126**) is at least twice the thickness of the selection plate (**114**).

3. The selection plate (114) of claim 1, wherein the guiding members (124) are provided at corner locations of the opening (112).

4. Spreading apparatus (100) as in claim 1, comprising a selection plate (114) according to claim 1, wherein the cover (**104**) of the spreading apparatus (**100**) further comprises a shovel portion (108) configured to facilitate at least one of dispensing the particulate material and filling the particulate material into the bucket (**102**).

5. Spreading apparatus according to claim 4, wherein the cover (104) of the spreading apparatus (100) further comprises a handle (110) configured to facilitate handling of the spreading apparatus (100).

6. Spreading apparatus according to claim 4, wherein the cover (**104**) of the spreading apparatus (**100**) is detachably connected with the bucket (**102**).

7. Spreading apparatus according to claim 4, wherein the cover (104) of the spreading apparatus (**100**) is hingedly connected with the bucket (102).

8. A spreading apparatus (**100**) with a selection plate (**114**) according to any of claims 1-3.

## Patentansprüche

1. Selektionsplatte (**114**) für und anbringbar an eine Streuvorrichtung **(100)** zur Abgabe von partikulärem Material, wobei die Streuvorrichtung **(100)** umfasst:
einen Behälter **(102),** der ausgebildet ist, um das partikuläre Material zu lagern;
eine Abdeckung (**104**), die mit dem Behälter (**102**) verbunden ist;
eine Abgabeanordnung **(106),** die mindestens eine Öffnung (**112**) aufweist und ausgebildet ist, das partikuläre Material abzugeben,
wobei die Selektionsplatte (**114**) als Abgabeanordnung ausgebildet ist und an der Abdeckung **(104)** befestigbar ist und eine Vielzahl von Öffnungen beinhaltet, die die mindestens eine Öffnung definieren,
wobei die mindestens eine Öffnung entsprechend der erforderlichen Menge zur Abgabe des partikulären Materials eingestellt werden kann, wobei die Abgabeanordnung ferner umfasst
eine Barriere (**122**) zum Aufbrechen von Klumpen des partikulären Materials während der Abgabe,
**dadurch gekennzeichnet, dass**
die Barriere (**122**) mindestens ein Führungselement (**124**) umfasst, das quer innerhalb der mindestens einen Öffnung (**112**) angeordnet ist,
wobei das mindestens eine Führungselement eine Längskante (**126**) aufweist, die zumindest teilweise normal versetzt zu einer Ebene der mindestens einen Öffnung (**112**) angeordnet ist,
wobei die Längskante (**126**) einen schmalen Flansch (**128**) und einen breiten Flansch **(130)** aufweist, wobei der breite Flansch **(130)** so ausgebildet ist, dass er unter Abgabe des partikulären Materials als eine gerichtete Stützstruktur nach unten positioniert ist,
wobei die Führungselemente (**124**) während der Herstellung zusammen mit der Selektionsplatte (**114**) geformt oder alternativ durch Klebstoff an dem schmalen Flansch (**128**) und dem breiten Flansch **(130)** verbunden sind.

2. Selektionsplatte (**114**) nach Anspruch 1, wobei der normale Versatz der Längskante (**126**) mindestens die doppelte Dicke der Selektionsplatte (**114**) beträgt.

3. Die Selektionsplatte (**114**) nach Anspruch 1, wobei die Führungselemente (**124**) an Eckpositionen der Öffnung (**112**) bereitgestellt sind.

4. Streuvorrichtung **(100)** nach Anspruch 1, umfassend eine Selektionsplatte (**114**) nach Anspruch 1, wobei die Abdeckung **(104)** der Streuvorrichtung **(100)** ferner einen Schaufelabschnitt **(108)** umfasst, der so ausgebildet ist, zumindest eines, das Abgeben des partikulären Materials und das Füllen des partikulären Materials in den Behälter **(102)** zu erleichtern.

5. Streuvorrichtung nach Anspruch 4, wobei die Abdeckung **(104)** der Streuvorrichtung **(100)** ferner einen Griff **(110)** aufweist, der so ausgebildet ist, das Handhaben der Streuvorrichtung **(100)** zu erleichtern.

6. Streuvorrichtung nach Anspruch 4, wobei die Abdeckung **(104)** der Streuvorrichtung **(100)** mit dem Behälter (**102**) lösbar verbunden ist.

7. Streuvorrichtung nach Anspruch 4, wobei die Abdeckung (**104**) der Streuvorrichtung **(100)** schwenkbar mit dem Behälter **(102)** verbunden ist.

8. Streuvorrichtung **(100)** mit einer Selektionsplatte (**114**) nach einem der Ansprüche 1-3.

## Revendications

1. Une plaque de sélection (114) pour et rattachable à un appareil d'épandage (100) pour distribuer un matériau particulaire,
l'appareil d'épandage (100) comprenant:
un godet (102) configuré pour stocker le matériau particulaire;
un couvercle (104) relié au godet (102);
un dispositif de distribution (106) ayant au moins une ouverture (112) et configuré pour distribuer le matériau particulaire,
avec la plaque de sélection (114) étant formée comme le dispositif de distribution et étant rattachable au couvercle (104) et comprenant une pluralité d'apertures, définissant l'au moins une ouverture,
dans lequel l'au moins une ouverture peut être ajustée en fonction de la quantité requise pour la distribution du matériau particulaire,
le dispositif de distribution comprenant en outre
une barrière (122) pour casser les grumeaux du matériau particulaire pendant la distribution,
**caractérisé en ce que**
la barrière (122) comprend au moins un élément de guidage (124) disposé transversalement à l'intérieur de l'au moins une ouverture (112),
dans lequel l'au moins un élément de guidage a un bord longitudinal (126) qui est au moins partiellement disposé normalement décalé par rapport à un plan de l'au moins une ouverture (112),
dans lequel le bord longitudinal (126) a une bride étroite (128) et une bride large (130), dans lequel la bride large (130) est configurée pour être positionnée vers le bas, tout en distribuant le matériau particulaire, pour agir en tant que structure de support directionnel, avec les éléments de guidages (124) étant moulés ensemble avec la plaque de sélection (114) pendant la fabrication ou en variante assemblés par un adhésif au niveau de la bride étroite (128) et de la bride large (130).

2. La plaque de sélection (114) selon la revendication 1, dans laquelle le décalage normal du bord longitudinal (126) est au moins deux fois l'épaisseur de la plaque de sélection (114).

3. La plaque de sélection (114) selon la revendication 1, dans laquelle les éléments de guidages (124) sont prévus dans des emplacements d'angle de l'ouverture (112).

4. Appareil d'épandage comme dans la revendication 1 comprenant une plaque de sélection (114) selon la revendication 1, dans lequel le couvercle (104) de l'appareil d'épandage (100) comprend en outre une partie pelle (108) configurée pour faciliter au moins un parmi la distribution du matériau particulaire et le remplissage de la matière particulaire dans le godet (102).

5. Appareil d'épandage selon la revendication 4, dans lequel le couvercle (104) de l'appareil d'épandage (100) comprend en outre une poignée (110) configurée pour faciliter la manipulation de l'appareil d'épandage (100).

6. Appareil d'épandage selon la revendication 4, dans lequel le couvercle (104) de l'appareil d'épandage (100) est relié de manière détachable au godet (102).

7. Appareil d'épandage selon la revendication 4, dans lequel le couvercle (104) de l'appareil d'épandage (100) est articulé avec le godet (102).

8. Un appareil d'épandage (100) avec une plaque de sélection (114) selon l'une quelconque des revendications 1-3.
